# EUROPÄISCHE PATENTSCHRIFT

(11) **EP 0 395 988 B1**
(45) Veröffentlichungstag und Bekanntmachung des Hinweises auf die Patenterteilung: **09.10.1996**
(21) Anmeldenummer: 90107711.5
(22) Anmeldetag: 24.04.1990
(51) Int. Cl.: C09B 67/20, C09B 67/22, C09D 17/00

(54) **Pigmentzubereitungen und deren Verwendung**
Pigment preparations and their use
Préparations de pigments et leur utilisation

(30) Priorität: 29.04.1989 DE 3914384
(43) Veröffentlichungstag der Anmeldung: 07.11.1990
(73) Patentinhaber: BASF Aktiengesellschaft, 67063 Ludwigshafen (DE)
(72) Erfinder: Jesse, Joachim, Dr., D-6714 Weisenheim (DE); Gonzalez Gomez, Juan Antonio, Dr., D-440 Muenster-Hiltrup (DE); Bock, Gustav, Dr., D-6730 Neustadt (DE); Guenthert, Paul, Dr., D-6707 Schifferstadt (DE)

(56) Entgegenhaltungen:
- EP-A- 0 189 385
- DE-A- 2 103 030
- US-A- 3 915 634
- US-A- 4 704 165

## Beschreibung

Bei der Herstellung von Druckfarben setzt sich mehr und mehr durch, die Pigmente in höherer Konzentration anzureiben. Immer häufiger werden zunächst auch sogenannte Stammpasten, d.h. bindemittelarme oder gar bindemittelfreie Dispersionen der Pigmente in Mineralöl, Toluol oder anderen Lösungsmitteln mit hoher Konzentration der Pigmente hergestellt. Diese Konzentrate werden dann mit den verschiedenen Bindemitteln oder konzentrierten Bindemittel lösungen zu Druckfarben aufgelackt. Das konzentrierte Anreiben stellt hohe Anforderungen an das Fliepverhalten der Druckfarben oder Stammpasten, die mit den gängigsten organischen Buntpigmenten wie Pigment Blue 15, Pigment Red 57 und Pigment Yellow 12 oder 13 um so weniger erfüllt werden können, je höher pigmentiert angerieben werden soll.

Durch Belegung der Pigmente mit oberflächenaktiven Substanzen können jedoch Pigmentzubereitungen erhalten werden, die zu besser fließenden Druckfarben oder zu noch pumpbaren Stammpasten mit hoher Pigmentkonzentration verarbeitet werden können.

In der EP-A-189 385 wird ein Dispergierhilfsmittel beschrieben, das eine Belegung der Pigmente in wäßriger Suspension erlaubt. Mit den belegten Pigmenten lassen sich niedriger viskose Dispersionen mit einer höheren Feststoffkonzentration herstellen als mit den entsprechenden unbelegten Pigmenten. Dabei können die Pigmente mit den Dispergierhilfsmitteln allein oder mit Kombinationen aus den Dispersionshilfsmitteln und anderen Substanzen, die mit den Dispersionshilfsmitteln eine synergistische Wirkung besitzen, belegt werden. Die fließverbessernde Wirkung der in der EP-A-189 385 beschriebenen Dispersionshilfsmittel ist jedoch nicht in allen Fällen ausreichend. Durch steigende Mengen an Dispersionshilfsmittel kann zwar das Fliepverhalten der mit den Pigmentzubereitungen der EP-A-189 385 hergestellten Druckfarben, Lacke und Pasten verbessert werden, jedoch fällt die Farbstärke entsprechend dem Gehalt an farblosen Additiven (Hilfsmitteln) ab.

Weiterhin sind aus der US-A-4 704 165 Pigmentzubereitungen bekannt, die Phosphorsäureester als Dispergierhilfsmittel enthalten, und wird in der DE-A-21 03 030 ein Verfahren zur Herstellung von Kupferphthalocyaninpigmenten beschrieben, bei dem die übliche Lösungsmittelbehandlung mit der Zugabe eines Sulfonamidgruppen tragenden Kupferphthalocyaninderivates kombiniert wird. Aber auch diese Pigmentzubereitungen sind nicht zufriedenstellend.

Um besser fließende Druckfarben, Lacke und Pasten zu erhalten und damit die Wirtschaftlichkeit der Herstellung solcher Farben zu verbessern, besteht ein Bedarf an besser wirksameren Additiven, deren Anwendung zu keiner oder nur zu einer geringen Farbstärkeminderung führt.

Aufgabe der vorliegenden Erfindung war es, Pigmentzubereitungen bereitzustellen, die sich zu besser fließenden Druckfarben oder Stammpasten verarbeiten lassen.

Die Erfindung betrifft Pigmentzubereitungen, die
a) ein feinteiliges Pigment,
b) 1 bis 20 Gew.-% - bezogen auf die Zubereitung - mindestens eines Farbmittels, das mindestens eine externe basische Gruppe aufweist,
c) 3 bis 30 Gew.-% - bezogen auf die Zubereitung - mindestens eines Phosphorsäureesters aus der Gruppe Dialkyl-, Trialkyl-, Diaryl-, Triaryl-, Alkylarylphosphorsäureester oder der Gruppe der sauren oder neutralen Phosphorsäureester auf der Basis von Fettalkohol-Ethylenoxid-Addukten, Fettalkohol-Propylenoxid-Addukten, Polypropylenglykol, Polyethylenglykol oder von Blockcopolymeren auf der Basis Propylenoxid und Ethylenoxid und
d) gegebenenfalls in Pigmentzubereitungen übliche weitere Hilfsmittel.
enthalten.

Mit den Zubereitungen der Erfindung erhält man Druckfarben, Lacke und Stammpasten, die gegenüber Druckfarben, Lacken und Pasten, die mit unbelegten Pigmenten hergestellt wurden, deutlich besser fließen und keine oder nur eine geringe Farbstärkeminderung aufweisen. Außerdem weisen die mit diesen Farben erhaltenen Färbungen erhöhten Glanz und verbesserte Lasur auf.

Farbmittel, die mindestens eine externe basische Gruppe aufweisen, entsprechen vorzugsweise der allgemeinen Formel (I)

F⁅Z-X]ₙ (I),

in der F einen n-wertigen Farbstoffrest, Z ein Brückenglied, X eine sekundäre, tertiäre oder quaternäre basische Gruppe und n 1-4 bedeuten.

F ist dabei ein n-wertiger Farbstoffrest, der sich von in Wasser löslichen bis in Wasser unlöslichen Farbmitteln ableiten kann. Vorzugsweise leitet sich F von solchen Farbmitteln ab, die im Farbton den in den Zubereitungen enthaltenen Pigmenten (a) ähnlich sind bis im Farbton entsprechen.

F leitet sich z.B. ab von Monoazo- oder Bisazofarbstoffen, vom Chinophthalon, von Indigoiden, von Phenylgruppen enthaltenden Anthrachinonfarbstoffen, von höher anellierten Carbonylfarbstoffen, von Carbonylgruppen enthaltenden Farbstoffen wie Chinacridon und dessen Derivaten, von Phthalocyaninen, von Perylen-3,4,9,10-tetracarbonsäurediimiden und Naphthalin-1,4,5,8-tetracarbonsäuredimiden, wobei F gegebenenfalls eine Sulfonsäuregruppe trägt.

Besonders bevorzugt sind Zubereitungen, bei denen sich F von schwer bis unlöslichen Farbstoffen bzw. von Pigmenten ableitet, insbesondere von den als (a) verwendeten Pigmenten oder von Verbindungen aus dieser Gruppe.

Das Brückenglied Z entspricht vorzugsweise der Formel (II)

-Y-A-(CH₂)̵ₘ (II),

in der Y (̵CH₂)̵ₚ, -SO₂- oder -CO-, A eine chemische Bindung, -O-, -NH-CO-, -COO- oder 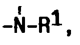 worin R¹ H, C₁-C₂₀-Alkyl oder Alkoxyalkyl mit insgesamt 3 bis 6 C-Atomen ist,
p 1 bis 6 und m 0 bis 6 bedeuten.

X steht vorteilhafterweise für eine sekundäre oder tertiäre Aminogruppe, für eine quaternäre Ammoniumgruppe oder für einen basischen 5- oder 6-gliedrigen Heterocyclus, insbesondere für einen gegebenenfalls substituierten Imidazolrest.

Vorzugsweise steht X für einen Rest der Formeln 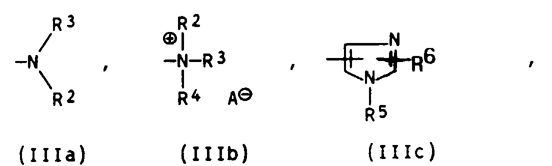 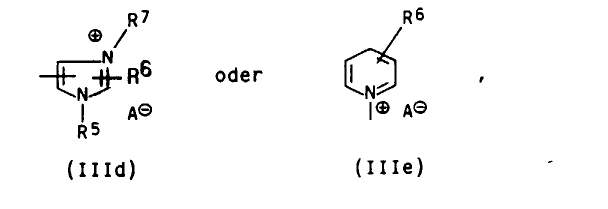 in denen R² und R³ unabhängig voneinander H, C₁-C₂₀-Alkyl, Alkoxyalkyl mit insgesamt 3 bis 8 C-Atomen, C₂-C₁₈-Hydroxyalkyl oder C₃- bis C₁₈-Alkenyl oder einer der Reste R³ oder R² gegebenenfalls durch C₁-C₄-Alkoxy, C₁-C₄-Alkyl oder Chlor substituiertes Phenyl oder Benzyl,
- R⁴: H, C₁-C₂₀-Alkyl, C₂-C₁₈-Hydroxyalkyl oder Alkoxyalkyl mit insgesamt 3 bis 8 C-Atomen,
- R⁵ und R⁶: unabhängig voneinander H oder C₁-C₄-Alkyl,
- R⁷: C₁-C₄-Alkyl oder Hydroxy-C₂-C₄-Alkyl und A^{⊖} ein Äquivalent eines Anions bedeuten.

Als Farbmittel, die eine externe basische Gruppe tragen, kommen z.B. im einzelnen in Betracht:
a) aus der Reihe der Phthalocyanine 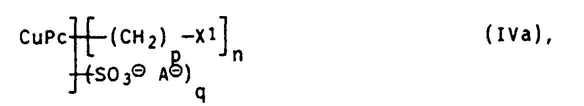 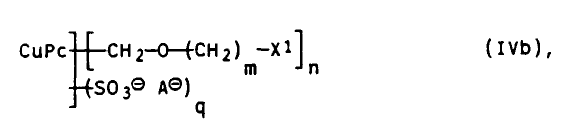 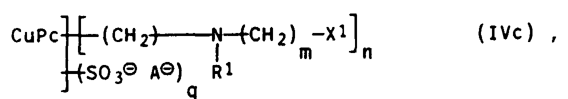 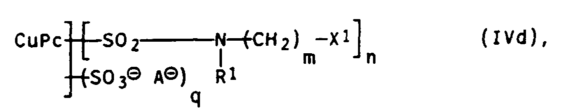 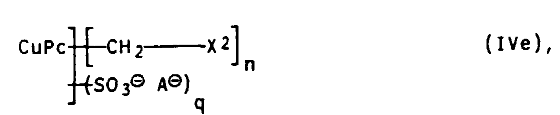 und 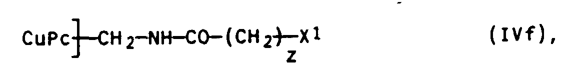 worin
   - X¹: Reste der Formeln (IIIa) oder (IIIb)
   - X²: Reste der Formeln (IIIc), (IIId) oder (IIIe),
   - n: 1 bis 4 und q 0,1 oder 2 bedeuten, wobei 1 ≤ (n+q) ≤ 4 ist;
b) aus der Reihe der Azofarbstoffe: 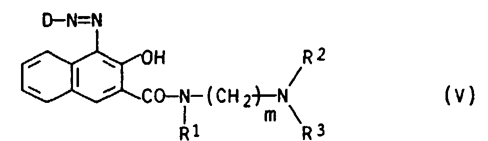 worin D der Rest einer Diazokomponente ist und
   R1 die oben angegebene Bedeutung hat oder: 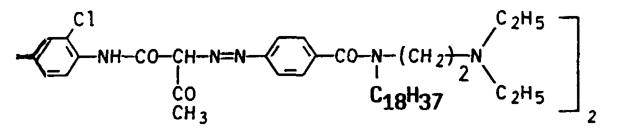
c) aus der Reihe der Chinophthalone: 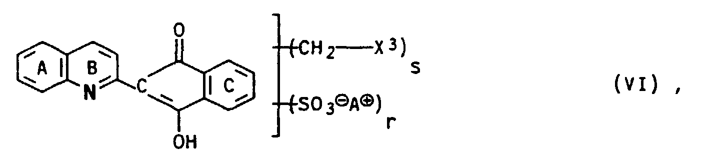 worin X³ ein Rest der Formeln (IIIc) oder (IIId), r 0 oder 1 und s 1 oder 2 sind;
d) aus der Reihe der Dioxazinpigmente, z.B. 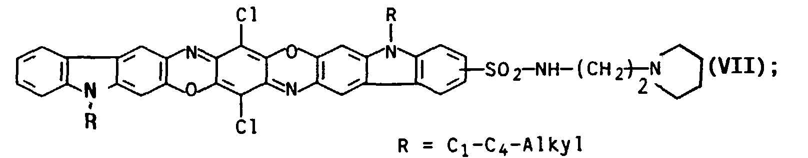
e) aus der Reihe der Chinacridone, z.B. 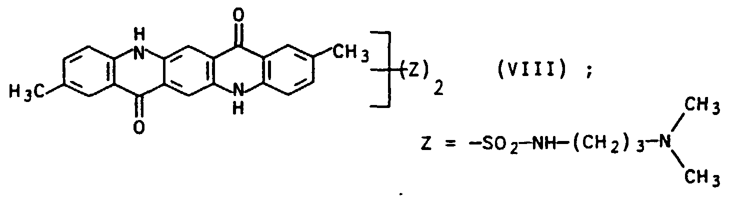
f) aus der Reihe der anellierten Carbonylfarbstoffe, z.B. 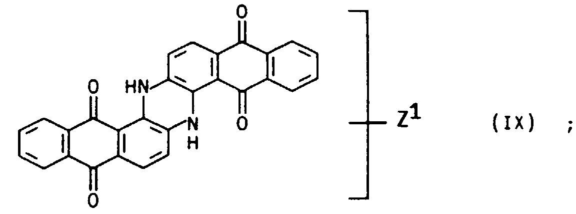 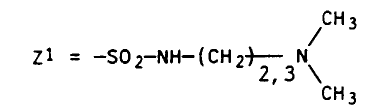 oder 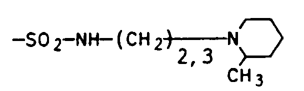
g) aus der Reihe der Indigoide, z.B.

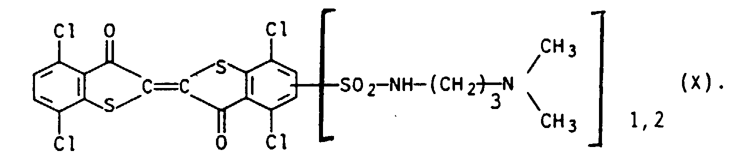

Die Mittel (c) dienen als Dispergierhilfsmittel. Für (c) kommen Dialkyl-, Diaryl-, Trikalkyl-, Triaryl- und Alkylarylphosphorsäureester und saure und neutrale Phosphorsäureester auf Basis von Fettalkohol-EO-Addukten, Fettalkohol-Propylenoxid-Addukten, von Polyethylenglykol, von Polypropylenglykol oder von Blockcopolymeren auf der Basis Propylenoxid und Ethylenoxid in Betracht. Für (c) sind z.B. im einzelnen zu nennen:
i) Dialkyl- und Trialkylphosphorsäureester wie Di- und
   Trinonylphosphat, Di-2-ethylhexylphosphat, Di- und
   Triisobutylphosphat, Mono- und Di-C₆-C₁₀-alkanolphosphat mit linearen oder verzweigten Alkylresten;
ii) Di- und Triarylphosphorsäureester wie Di- und Triphenylphosphat,
   Di- und Trikresylphosphat;
iii) Alkylarylphosphorsäureester;
iv) saure und neutrale Phosphorsäureester auf der Basis von EO-, PO-Addukten wie
   Di- und Triester mit C₁₃-C₁₅-Oxoalkol + PO + EO,
   Di- und Triester mit C₁₃-C₁₈-Fettalkohol-EO-Addukten mit 1 bis 20 EO,
   Polyethylenglykol-mono- und -diester der Phosphorsäure;
v) Mono-, Di- und Triester von hydroxyterminierten Polyestern, wie Polyhydroxystearinsäure.

Für (c) geeignete Phosphorsäureester sind z.B. unter den Namen Lutensit^{®} A-EP, Korantin^{®} SMK und LKB, Primasol^{®} NF 100 (alle BASF), Degressal^{®} SD 40 (Degussa), Plysurf^{®} A 207 H, A 208 B, A 212 C, A 212 E, A 217 E und A 219 B (DKS International Inc.), Gafac RS 610 und RS 710 (GAF-Corp.), Knapsack-Phosphorsäureester 122, 124, 158, 123, 185, 215, MDAH, MDIT, MOB, MDB, MDL und MDST im Handel erhältlich.

Die Pigmentzubereitungen enthalten - bezogen auf die Zubereitung - 1 bis 20 Gew.-% der externe basische Gruppen enthaltenden Farbmittel (b) und 3 bis 30 Gew.-% der als Dispergierhilfsmittel wirkenden Mittel (c).

Bevorzugt sind Zubereitungen, die 3 bis 15 Gew.-% (b) und 5 bis 20 Gew.-% (c) enthalten.

Als weitere in Pigmentzubereitungen übliche Mittel (d) kommen z.B. Abietinsäure, Resinate, Kolophonium und dessen Abwandlungen (Modifizierungen) in Betracht. Der Anteil dieser Mittel kann bis zu 50 Gew.-%, bezogen auf (a) betragen.

Die Mittel (d) und deren Anwendung gehören zum Stand der Technik und liegen im Bereich des auf diesem Gebiete kundigen Fachmanns.

Die Zubereitungen können durch mechanisches Mischen der Komponenten (a), (b), (c) und (d) hergestellt werden.

Vorteilhafterweise wird (b) dem Pigment (a) als Dispersion oder gelöst vor, während oder nach dem Finish zugegeben bzw. vor, während oder nach der Belegung des Pigmentes mit oberflächenaktiven Mitteln wie Harzen u.a. zugegeben.

Die als Dispergierhilfsmittel wirkenden Mittel (c) werden entweder direkt oder in Form von Lösungen der Pigmentsuspension zugegeben.

Man kann aber auch so verfahren, daß man (b) zunächst mit (c) versetzt und dann das erhaltene Gemisch dem Pigment oder der Pigmentsuspension zusetzt.

Das Belegen der Pigmente kann in der bei der Synthese oder beim Finish anfallenden Suspension erfolgen. Man kann aber auch das Pigment zunächst isolieren und dann zum Belegen mit (b), (c) und (d) erneut in Wasser oder Gemischen aus Wasser und organischen Lösungsmitteln suspendieren.

Die Belegung mit (b), (c) und (d) kann bei Raum- oder höherer Temperatur, z.B. bis 100°C, erfolgen.

Das belegte Pigment wird in üblicher Weise aus der Suspension durch Filtrieren isoliert. Das Filtergut kann getrocknet werden.

Das wasserfeuchte Filtergut kann aber auch direkt durch Flushen in konzentrierte Druckfarben überführt werden.

In den Fällen, bei denen das Rohpigment vor dem Finish durch Mahlen, z.B. in Kugelmühlen oder ähnlich intensiv wirkenden Mühlen zerkleinert wird, können dem Rohpigment die Komponenten (b) und (c) als solche oder in Form der durch Umsetzen (Fällen) von (b) mit (c) erhältlichen Additivkombination vor, während oder nach dem Mahlen zugesetzt werden.

In diesem Fall erhält man Pigmentzubereitungen, die besonders gut fließende Druckfarben, Lacke und Stammpasten liefern, weshalb diese Arbeitsweise besonders bevorzugt ist.

Die Zubereitungen können auch durch Einarbeiten der Pigmente (a) mit den Mitteln (b) und (c) oder von (a) mit der Additivkombination aus (b) und (c) und gegebenenfalls (d) in Lösungsmitteln oder Mineralöl in Form von Stammpasten oder bindemittelarmen Konzentraten erhalten werden.

Diese Stammpasten/Konzentrate können dann zu Druckfarben oder Lacken verdünnt werden.

Die erfindungsgemäßen Zubereitungen zeigen im Vergleich zu den unbehandelten Pigmenten deutlich bessere koloristische, rheologische und drucktechnische Eigenschaften. Der Vorteil der erfindungsgemäßen Zubereitungen liegt in der Kombination aus gutem Fliepverhalten der Druckfarbe bzw. der Stammpaste bei gleichzeitig hoher Transparenz und hohem Glanz der Drucke. In vielen Fällen lassen sich deutlich besser fließende Druckfarben oder Stammpasten ohne Farbstärkeminderung herstellen als mit Pigmenten, die mit dem Dispergierhilfsmittel der EP-A-189395 hergestellt wurden.

Die verschiedenen Kombinationen sowie Art und Menge der Additive sowie die unterschiedlichen Bedingungen der Belegungen sollen durch die folgenden Beispiele gezeigt und erläutert werden.

### A. Druckfarben und deren Prüfung

Die erhaltenen Zubereitungen und Vergleiche wurden nach den folgenden Angaben zu Druckfarben verarbeitet und diese Farben geprüft.

### A1 Offsetdruckfarbe

Die Pigmente wurden in einem Firnis aus 38 Tl. Maleinatharz (Alresat^{®}SKA der Fa. Albert, Wiesbaden), 42 Tl. Lackleinöl und 20 Tl. Mineralöl PKWF 6/9 (Fa. Haltermann, Hamburg) eingerührt und anschließend mit dem Dispermat-Dissolver (Zahnscheibe φ 3 cm, 12.000 U/min) 10 min bei 70°C vordispergiert. Anschließend wurde die Farbe auf dem auf 35°C temperierten Bühlerwalzenstuhl SDY 200 dreimal bei 15 bar Anprepdruck der Walzen angerieben.

Die Pigmentierungshöhe ist in den Beispielen angegeben. Die Fließwerte wurden nach A3 bestimmt.

### A2 Bestimmung der Lasur von Offsetfarben

Die nach A1 hergestellte Offsetfarbe wurde auf dem Tellerreiber (Engelsmann) durch Zugeben einer Bindemittel lösung (Alkydal^{®}F 681 75 %ige Lösung in Benzin, Bayer AG) bei 25 kg Belastung auf 10 % Pigmentgehalt verdünnt und gemischt. Die Mischung wurde mit dem Erichsen-Filmziehgerät in 100µm Schichtdicke auf Kontrastkarton (schwarz-weiß) aufgetragen, wobei der Mischung auf der Reibplatte unmittelbar vor dem Auftrag 8 Tropfen Trockenstoff "Octa Soligen Kobalt (1,7 %), Blei (15,7 %) flüssig" (Hoechst) zugemischt wurden. Die Lasur wurde visuell abgemustert.

### A3 Beurteilung des Fließverhaltens der Offsetdruckfarben

Das Fliepverhalten der Offsetdruckfarben wurde nach der Fließblechmethode bestimmt. Zur Herstellung des Fließbleches wurde mit dem Erichsen-Tiefziehgerät auf einem 25 x 6 cm Tiefziehblech eine näpfchenförmige Vertiefung von 10 mm gezogen. Der Mittelpunkt dieser Vertiefung ist die Stufe 1. Im Abstand von jeweils 40 mm wurden am Rand des Bleches Markierungen angebracht, die den Noten 2 bis 5 entsprechen.

3 g der zu messenden Offsetfarbe wurde jeweils in die Vertiefung des zunächst waagerecht liegenden Bleches eingewogen. Nach 30 min Lagerung wurde das Blech im Klimaraum senkrecht aufgehängt, so daß die Farbe nach unten fließen konnte. Druckfarben, die nach der Lagerung nicht flossen, erhielten die Note 1. Die Druckfarben wurden nach 5, 10 und 60 min abgemustert. Systeme, die während der Lagerung zur Thixotropie neigten, wurden direkt nach der Einwaage der Druckfarbe senkrecht aufgehängt. Gemessen wurde dann die Zeit, in der die einzelnen Bewertungsstufen erreicht wurden.

### A4 Illustrationstiefdruckfarbe

- 4.1: Die Pigmente wurden in einer 35 %igen Lösung eines mit Kolophonium modifizierten Phenolharzes (Albertol^{®}KP 670 der Fa. Reichhold-Albert-Chemie AG) in Toluol (Viskosität auf 14 sec eingestellt, gemessen mit DIN-Becher 4 mm) mit dem Red Devil^{®} 60 min angerieben. Die Pigmentierungshöhe ist jeweils in den Beispielen angegeben.
- 4.2: Das Fliepverhalten wurde an den über Nacht bei 20°C gelagerten Druckfarben mit dem DIN-Becher mit 4 mm Düse gemessen.
- 4.3: Der Glanz wurde bei 60° mit dem Byk-Mallinckrodt-Pocket-gloss-Gerät an Färbungen bestimmt, die durch Abziehen der Farbe mit dem 6µm Erichsen-Spiralrakel auf Illustriertenpapier erhalten wurden.

### A5 Nitrocellulose-Druckfarben

- 5.1: Die Pigmente wurden in einem Nitro-Lack aus 17,5 Tl. Nitrocellulose A 400-Chips, 20 Tl. Essigester und 62,5 Tl. Ethanol mit dem "Red Devil" 60 min angerieben. Die Pigmentierungshöhe ist in den Beispielen angegeben.
- 5.2: Die Transparenz wurde visuell an Folienaufzügen auf Klarsicht- und Aluminiumfolie (12 µm Erichsen-Spiralrakel) bestimmt.
- 5.3: Die Glanzmessung wurde an Färbungen auf Klarsichtfolie bei 60° mit dem Byk-Mallinckrodt-Pocket-gloss-Gerät durchgeführt.

### B. Ausführungsbeispiele

### Beispiel 1 (Zubereitung 1)

105 g des nach der DE-A-28 51 752, Beispiel 1a hergestellten Kupferphthalocyanins wurden analog Beispiel 2 der DE-A gefinisht. Vor dem Isolieren des Pigments wurde die Suspension mit 2 1 Wasser (Raumtemperatur) verdünnt und unter Rühren mit 4,5 g des extern basischen CuPc (1) in Form des wäßrigen Preßkuchens und 6 g eines sauren Phosphorsäureesters versetzt, der als Estergruppe ein Umsetzungsprodukt eines C₁₃- C₁₅-Ox-alkoholgemisches mit 6 Mol PO und dann mit 12 Mol EO je Mol Alkohol enthält.

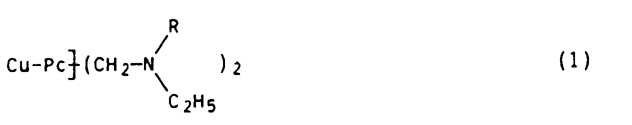

CuPc = Kupferphthalocyanin, Gemisch aus Verbindungen mit R = H und C₂H₅, das im Mittel 0,1 Sulfogruppen enthält.

Die Suspension wurde 1 Stunde ohne Wärmezufuhr nachgerührt. Anschließend wurde die Pigmentzubereitung isoliert, getrocknet und gemahlen.

### Beispiel 2 (Zubereitung 2)

Es wurde wie in Beispiel 1 verfahren, jedoch wurden zum gefinishten Pigment 9 g basisches CuPc (1) in Form des wäßrigen Preßkuchens und 12 g des in Beispiel 1 genannten sauren Phosphorsäureesters gegeben.

Die nach den Beispielen 1 und 2 erhaltenen Pigmentzubereitungen geben Offset-Druckfarben, die bei Pigmentgehalten von 18 % sehr gut fließen. Die Fliepblechwerte sind in den Tabellen 1 und 2 angegeben.

### Vergleichsbeispiel 1 (Vergleich 1)

100 g CuPc-Pigment in Form des wäßrigen Preßkuchens (hergestellt nach DE-A-28 51 752, Bsp. 2) wurden in 2,5 l Wasser (25°C) 2 Stunden suspendiert. Dann wurden 5 g (1) (vgl. Bsp. 1) in Form des wäßrigen Preßkuchens zugegeben und das Gemisch 1 Stunde nachgerührt. Nach dem Absaugen wurde die Zubereitung (Vergleich 1) getrocknet und gemahlen.

### Vergleich 2

Das nach DE-A-28 51 752, Bsp. 2 erhältliche unbelegte CuPc-Pigment.

Verwendet man die Pigmente der Vergleiche 1 und 2 entsprechend den Angaben der Beispiele 1 und 2, dann erhält man mit der gleichen Menge Pigment Offsetdruckfarben, die auf dem Fließblech sehr schlecht (Vergleich 1) bzw. nicht mehr fließen (Vergleich 2). Die mit den Pigmentzubereitungen 1 und 2 erhaltenen Offsetdruckfarben geben Färbungen (erhalten durch Abziehen der Farbe auf Kontrastkarton mit einer 150 µm Spiralrakel;
Schichtdicke 150 µm) die deutlich transparenter sind als Färbungen mit den Vergleichspigmenten.

### Beispiele 3 bis 28

100 g CuPc-Pigment in Form des wäßrigen Preßkuchens (hergestellt nach DE-A-28 51 752, Beispiel 2) wurden in 2,5 1 Wasser bei Raumtemperatur 2 Stunden suspendiert. Dann gab man 5 g basisches CuPc (1) in Form des wasserfeuchten Preßkuchens und jeweils 7 g der in der folgenden Tabelle angegebenen Phosphorsäureester hinzu. Die Suspension wurde 1 Stunde gerührt, die Zubereitung abgetrennt, getrocknet und gemahlen.

**Tabelle 1**

| Beispiel 1 | Phosphorsäureester |
|---|---|
| 3 | Monoalkylester auf Basis eines verzweigten C₆-C₁₀-Alkanols |
| 4 | Di-(2-ethylhexyl)-phosphat |
| 5 | saurer Ester auf Basis Umsetzungsprodukt aus C₁₃-C₁₅-Oxo- alkohol mit 6 Mol PO und dann mit 12 Mol EO je Mol Oxoalko- hol |
| 6 | Tri-isobutylphosphat |
| 7 | Polypropylenglykolphosphorsäureester (sauer) |
| 8 | Trikresylphosphat |
| 9 | Plysurf®A 207 H (DKS International Inc.) |
| 10 | Plysurf®A 208 B |
| 11 | Plysurf®A 212 C |
| 10 | Plysurf®A 212 E |
| 10 | Plysurf®A 217 E |
| 10 | Plysurf®A 219 B |
| 15 | Gemisch aus Mono- und Di-Estern des Adduktes von Dodecanol + 3 EO |
| 16 | Di-(alkylphenyl-)phosphat |
| 17 | Monoester von Fettalkohol-EO-Addukten |
| 18 | Diester von Fettalkohol-EO-Addukten |
| 19 | Knapsack-Phosphorsäureester 158 (Hoechst AG) |
| 20 | Knapsack-Phosphorsäureester 123 |
| 21 | Knapsack-Phosphorsäureester 185 |
| 22 | Knapsack-Phosphorsäureester 215 |
| 23 | Knapsack-Phosphorsäureester MDAH |
| 24 | Knapsack-Phosphorsäureester MDIT |
| 25 | Knapsack-Phosphorsäureester MOB |
| 26 | Knapsack-Phosphorsäureester MDB |
| 27 | Knapsack-Phosphorsäureester MDL |
| 28 | Knapsack-Phosphorsäureester MDST |

Aus den nach den Beispielen 3 bis 28 hergestellten Pigmentzubereitungen lassen sich Offsetdruckfarben herstellen, die im Unterschied zu einer Druckfarbe mit dem Vergleich 1 bzw. Vergleich 2 bei 18 %iger Pigmentierung fließen. Die Fliepblechwerte sind in den Tabellen 1 und 2 zusammengestellt.

Gegenüber dem Pigment der DE-A-28 51 752, Beispiel 2 (Vergleich 2) liefern die Pigmentzubereitungen der Beispiele 3 bis 28 Färbungen mit höherer Transparenz.

### Beispiel 29 (Zubereitung 29)

100 g CuPc in Form des Preßkuchens (hergestellt nach Beispiel 2 der DE-A- 28 51 752) wurden in 2,5 1 Wasser bei Raumtemperatur 2 Stunden suspendiert. Dazu wurden 5 g des wasserfeuchten Prepkuchens eines extern basischen Farbmittels (2) und 7 g des in Beispiel 5 angegebenen sauren Phosphorsäureesters gegeben.

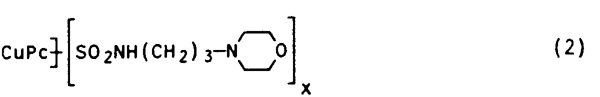

CuPc = Kupferphthalocyanin, Gemisch aus Verbindungen mit x = 2 und x = 3

Die Suspension wurde 1 Stunde bei Raumtemperatur gerührt. Anschließend wurde die Pigmentzubereitung isoliert, getrocknet und gemahlen.

Eine Offsetfarbe aus der erhaltenen Pigmentzubereitung fließt bei 18 %iger Pigmentierung, während eine Offsetfarbe mit dem Vergleich 2 bzw. mit dem Vergleich 1 bei dieser Pigmentierungshöhe nicht fließt. bwz. nur sehr schlecht fließt. Die Fliepblechwerte sind in den Tabellen 2 und 3 angegeben.

Gegenüber dem Pigment der DE-A-28 51 752, Beispiel 2 gibt die erhaltene Pigmentzubereitung Färbungen mit höherer Transparenz.

### Beispiel 30 (Zubereitung 30)

Es wurde wie im Beispiel 29 verfahren, jedoch wurde das extern basische Farbmittel der Formel 3 verwendet.

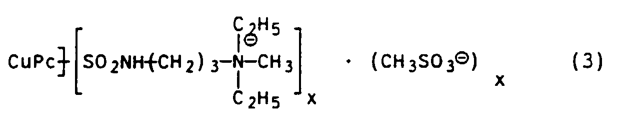

CuPc = Kupferphthalocyanin, Gemisch von Verbindungen mit x = 2 und x = 3.

Die mit der erhaltenen Zubereitung hergestellte Offsetfarbe fließt ohne Lagerung der Druckfarbe bei 18 %iger Pigmentierung (vgl. Tabelle 1). Die Offsetfarbe mit dem Pigment des Vergleichs 2 bzw. des Vergleichs 1 fließt bei dieser Pigmentierungshöhe auch ohne Lagerung der Druckfarbe nicht bzw. nur sehr schlecht (vgl. Tab. 1 und 2).

Gegenüber dem Pigment des Vergleichs 2 liefert die erhaltene Pigmentzubereitung Rakelungen mit höherer Transparenz.

### Beispiel 31 (Zubereitung 31)

100 g Kupferphthalocyanin in Form des Preßkuchens (hergestellt nach DE-A-28 51 752, Beispiel 2) wurden in 2500 ml Wasser von Raumtemperatur 2 Stunden suspendiert. Dann wurden 9 g des extern basischen Farbmittels (1) in Form des wasserfeuchten Preßkuchens sowie 12 g des in Beispiel 5 angegebenen sauren Phosphorsäureesters zugegeben.

Die Suspension wurde 1 Stunde bei Raumtemperatur gerührt und die Zubereitung dann isoliert, getrocknet und gemahlen.

Eine mit der Zubereitung 31 hergestellte Offsetfarbe fließt bei 18 %iger Pigmentierung, während eine Offsetfarbe mit dem Vergleich 2 bzw. mit dem Vergleich 1, mit dieser Pigmentkonzentration nicht oder nur sehr schlecht fließt. Die Fliepblechwerte sind in den Tabellen 1 und 2 zusammengestellt.

Gegenüber dem Pigment des Vergleichs 2 liefert die Pigmentzubereitung 31 Färbungen mit höherer Lasur.

Die Auslaufzeit einer nach A4 hergestellten Illustrationstiefdruckfarbe, die das Pigment des Vergleichs 2 enthält, ist bei Pigmentkonzentrationen von 12 und 8 % mit dem 4 mm-DIN-Becher nicht meßbar. Die entsprechenden Tiefdruckfarben, die mit den Zubereitungen 5 und 31 hergestellt wurden, besitzen ein hervorragendes Fliepverhalten und liefern Färbungen mit einem deutlich höheren Glanz als eine Druckfarbe, die das Pigment des Vergleichs 2 enthält. Fließ- und Glanzwerte sind in der Tabelle 3 zusammengestellt. Die Färbungen zeigen bei 8 %iger Pigmentierung eine um 5 bis 10 % höhere Farbstärke als die Färbungen der Vergleich 2 enthaltenden Druckfarbe.

Gegenüber Druckfarben mit dem Pigment des Vergleichs 2 fließen die Farben mit den Zubereitungen 15 bis 28 deutlich besser bei gleichem bis deutlich verbessertem Glanz der damit hergestellten Färbungen.

In den folgenden Tabellen 2 und 3 sind die Fließblechwerte der mit den Zubereitungen 1 bis 31 und dem Vergleichen 1 und 2 nach A1 hergestellten Offsetdruckfarben zusammengestellt.

**Tabelle 2:**

| Fließblechwerte ohne Lagerung der Druckfarbe (sec) | | | | |
|---|---|---|---|---|
| Zubereitung | Stufe | | | |
| | 2 | 3 | 4 | 5 |
| | wird erreicht nach sec | | | |
| Vergleich 1 | 90 | - | - | - |
| 1 | 6 | 18 | 38 | 74 |
| 2 | 7 | 20 | 36 | 68 |
| 3 | 14 | 48 | 135 | 435 |
| 4 | 16 | 63 | 165 | 486 |
| 5 | 10 | 32 | 70 | 154 |
| 6 | 11 | 38 | 110 | 600 |
| 7 | 16 | 115 | 1800 | - |
| 8 | 14 | 50 | 180 | - |
| 9 | 18 | 85 | 300 | - |
| 10 | 14 | 58 | 135 | 810 |
| 11 | 16 | 63 | 240 | - |
| 12 | 11 | 43 | 126 | 900 |
| 13 | 17 | 71 | 290 | - |
| 14 | 12 | 46 | 133 | 565 |
| 15 | 15 | 47 | 145 | 430 |
| 16 | 16 | 57 | 200 | 715 |
| 17 | 10 | 35 | 90 | 230 |
| 18 | 8 | 27 | 63 | 147 |
| 19 | 8 | 25 | 57 | 145 |
| 20 | 12 | 42 | 105 | 300 |
| 21 | 11 | 41 | 154 | - |
| 22 | 10 | 36 | 74 | 190 |
| 23 | 13 | 54 | 150 | 770 |
| 24 | 8 | 30 | 65 | 170 |
| 25 | 17 | 58 | 170 | 805 |
| 26 | 21 | 90 | 248 | 1510 |
| 27 | 16 | 59 | 170 | 610 |
| 28 | 12 | 42 | 120 | 425 |
| 29 | 14 | 57 | 900 | - |
| 30 | 24 | 105 | - | - |
| 31 | 8 | 27 | 58 | 115 |

**Tabelle 3:**

| Fließblechwerte nach 30 min Lagerung | | | |
|---|---|---|---|
| Zubereitung | 5 min. | nach 10 min. wird Stufe erreicht | 60 min |
| Vergleich 1 | 1 | 1 | 1 |
| Vergleich 2 | 1 | 1 | 1 |
| 1 | 2 | 4 | > 5 |
| 2 | 5 | > 5 | - |
| 3 | 2 | 2 | 2 |
| 4 | 2 | 3 | 4 |
| 5 | 4 | 5 | > 5 |
| 6 | 2 | 2 | 2 |
| 7 | 1 | 1 | 2 |
| 8 | 1 | 2 | 2 |
| 9 | 1 | 2 | 2 |
| 10 | 2 | 2 | 2 |
| 11 | 1 | 2 | 2 |
| 12 | 1 | 2 | 2 |
| 13 | 1 | 2 | 2 |
| 14 | 1 | 2 | 2 |
| 15 | 1 | 2 | 3 |
| 16 | 2 | 2 | 4 |
| 17 | 2 | 2 | 4 |
| 18 | 2 | 3 | > 5 |
| 19 | 1 | 2 | 4 |
| 20 | 2 | 2 | 3 |
| 21 | 1 | 1 | 2 |
| 22 | 2 | 2 | 4 |
| 23 | 2 | 2 | 3 |
| 24 | 2 | 2 | 3 |
| 25 | 1 | 2 | 2 |
| 26 | 1 | 2 | 2 |
| 27 | 1 | 2 | 2 |
| 28 | 1 | 2 | 2 |
| 29 | 1 | 2 | 2 |
| 30 | 1 | 1 | 1 |
| 31 | 5 | > 5 | - |

**Tabelle 4:**

| Fließ- und Lasurwerte von Illustrationsdruckfarben | | | |
|---|---|---|---|
| | Auslaufzeit in sec (gemessen mit DIN-Becher mit 4 mm Düse) bei Pigmentgehalt | | |
| Farbe mit Zubereitung | Glanz | 12 % | 8 % |
| Vergleich 1 | 49 | 53,8 | 19,7 |
| Vergleich 2 | 40 | n.m.¹⁾ | n.m.¹⁾ |
| 5 | 63 | 29,4 | 18,3 |
| 31 | 62 | 31,1 | 18,6 |
| 15 | 58 | 31,8 | 19,0 |
| 16 | 57 | 31,2 | 18,8 |
| 17 | 56 | 32,2 | 19,1 |
| 18 | 55 | 31,2 | 19,2 |
| 19 | 53 | 31,0 | 18,1 |
| 20 | 53 | 29,4 | 18,8 |
| 21 | 52 | 34,8 | 18,4 |
| 22 | 56 | 28,3 | 17,8 |
| 23 | 49 | 29,0 | 17,8 |
| 24 | 53 | 26,3 | 17,4 |
| 25 | 49 | 26,2 | 17,4 |
| 26 | 49 | 26,7 | 17,7 |
| 27 | 50 | 24,1 | 17,3 |
| 28 | 51 | 26,0 | 17,6 |

| | | | |
|---|---|---|---|
| ¹⁾ n.m. nicht meßbar | | | |

### Beispiel 32 (Zubereitung 32)

93 g Kupferphthalocyanin der ß-Modifikation in Form des wäßrigen Preßkuchens (hergestellt durch Mahlen mit Salz) wurden zusammen mit 2 g des Farbmittels (1) in Form des Prepkuchens zwei Stunden bei Raumtemperatur in 1 l H₂O suspendiert. Dann wurden 4 g des in Beispiel 5 angegebenen sauren Phosphorsäureesters zugegeben und das Gemisch 10 min. nachgerührt. Anschließend wurde die Pigmentzubereitung isoliert, getrocknet und gemahlen.

### Beispiel 33 (Zubereitung 33)

Es wurde wie in Beispiel 32 verfahren, jedoch wurden 4 g des Farbmittels (1) und 8 g des sauren Phosphorsäureesters verwendet.

### Vergleichsbeispiel 3 (Vergleich 3)

Es wurde wie in Beispiel 32 verfahren, jedoch wurde kein saurer Phosphorester zugegeben.

### Vergleichsbeispiel 4 (Vergleich 4)

Es wurde wie in Beispiel 33 gearbeitet, jedoch wurde kein saurer Phosphorsäureester zugegeben.

Mit den Pigmentzubereitungen 32 und 33 lassen sich Offset-Druckfarben herstellen, die bei 30-%iger Pigmentierung deutlich besser fließen als eine 30-%ig pigmentierte Druckfarbe mit dem entsprechenden unbelegten Pigment. Nach der Lagerung fließt die Druckfarbe des unbelegten Pigments nicht mehr, wohl aber die mit den Pigmentzubereitungen 32 und 33 hergestellten. Die Fliepblechwerte sind in den Tabellen 5 und 6 zusammengestellt.

Druckfarben mit den Zubereitungen 32 und 33 fließen bei 30-%iger Pigmentierung ohne Lagerung deutlich besser als solche mit den Vergleichen 3 und 4. Nach der Lagerung fließen die Farben der Vergleiche 3 und 4 nicht mehr. Gegenüber der Farbe mit Vergleich 2 liefern die Pigmentzubereitungen 32 und 33 Färbungen mit höherer Transparenz.

**Tabelle 5:**

| Fließblechwerte ohne Lagerung der Druckfarbe (sec) | | | | |
|---|---|---|---|---|
| Farbe mit Zubereitung | Stufe | | | |
| | 2 | 3 | 4 | 5 |
| | wird nach sec. erreicht | | | |
| 32 | 38 | 140 | 345 | 940 |
| 33 | 35 | 95 | 210 | 465 |
| Vergleich 2 | 2580 | - | - | - |
| Vergleich 3 | 195 | - | - | - |
| Vergleich 4 | 159 | - | - | - |

**Tabelle 6:**

| Fließblechwerte nach 30 min. Lagerung der Druckfarbe | | | |
|---|---|---|---|
| Farbe mit Zubereitung | nach | | |
| | 10 min. | 30 min. | 60 min |
| | wird Stufe erreicht | | |
| 32 | 2 | 3 | 4 |
| 33 | 4 | 5 | > 5 |
| Vergleich 2 | 1 | 1 | 1 |
| Vergleich 3 | 1 | 1 | 1 |
| Vergleich 4 | 1 | 1 | 1 |

### Beispiel 34 (Vergleich 34)

50 g Kupferphthalocyanin-Pigment der β-Modifikation, das aus isometrischen Teilchen von 0,25 µm besteht, in Form des Prepkuchens (hergestellt durch Finish eines in Gegenwart von Na₂SO₄ trocken gemahlenen Rohkupferphthalocyanins, wobei ein Mahlgut aus 25 % α- und 75 % β-Modifikation erhalten wird, in einem Gemisch aus Ethylenglykolmonobutylether und Wasser) wurden in 1250 Teilen Wasser bei Raumtemperatur mit 4,5 g des Farbmittels (1) in Form des Preßkuchens zwei Stunden suspendiert.

Nach der Zugabe von 9 g des in Beispiel 5 angegebenen sauren Phosphorsäureesters wurde die Suspension eine Stunde bei Raumtemperatur gerührt. Nach dem Filtrieren wurde die Pigmentzubereitung getrocknet und gemahlen.

Die Folienaufzüge einer nach A5 hergestellten Nitrocellulose-Druckfarbe (8-%ige Pigmentierung) weisen gegenüber denen einer entsprechenden Druckfarbe mit dem Vergleich 2 auf Klarsicht- und Aluminiumfolie eine deutlich höhere Transparenz auf. Im Glanz auf Klarsichtfolie (88 Punkte statt 70 Punkte des Vergleichs) bzw. auf Illustriertenpapier (53 statt 28 Punkte) ist die Druckfarbe mit der Pigmentzubereitung 34 ebenfalls überlegen.

### Beispiel 35 (Zubereitung 35)

115 g C.I. Pigment Yellow 13; C.I. Nr. 21 100, in Form des wäßrigen Preßkuchens (hergestellt und belegt mit 30 % Ca-resinat nach dem Stand der Technik) wurden zwei Stunden in 2000 ml Wasser bei Raumtemperatur suspendiert und dann mit 26 g einer 20-%igen wäßrigen Lösung des Farbstoffs (4) versetzt.

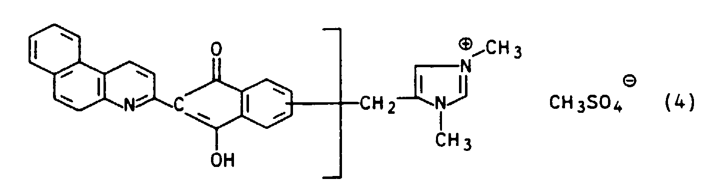

Nach dem Zugeben von 10,4 g des in Beispiel 5 angegebenen sauren Phosphorsäureesters wurde die Mischung eine Stunde bei Raumtemperatur nachgerührt. Anschließend wurde die Pigmentzubereitung isoliert, getrocknet und gemahlen.

### Vergleichsbeispiel 5 (Vergleich 5)

Es wurde wie in Beispiel 35 verfahren, jedoch wurde kein Phosphorsäureester zugegeben.

Die Färbungen einer mit Zubereitung 35 nach A 5 hergestellten Nitrocellulose-Druckfarbe (8-%ige Pigmentierung) weisen gegenüber denen einer entsprechenden Druckfarbe mit dem Vergleich 5 oder dem unbelegten Pigment eine deutlich höhere Transparenz auf Klarsicht- und Aluminiumfolie auf. Im Glanz auf Klarsichtfolie (46 statt 22 Punkte) bzw. auf Illustriertenpapier (17 statt 8 Punkte) ist die Druckfarbe mit der Pigmentzubereitung 35 ebenfalls überlegen. Die Färbung mit der den Vergleich 5 enthaltenden Farbe weist auf Klarsichtfolie einen Glanz von 16 bzw. auf Illustriertenpapier von 7 auf.

### Beispiel 36

150 g Pigment Red 57:1; C.I. Nr. 15850:1 in Form des Preßkuchens (nach Verfahren des Standes der Technik hergestellt und mit 15 % - bezogen auf Pigment - Ca-resinat belegt) wurden in 3500 ml Wasser bei Raumtemperatur zwei Stunden suspendiert.

Dann wurden 6,7 g des Farbmittels (5) in Form des wäßrigen Preßkuchens und 13,5 g des in Beispiel 5 angegebenen sauren Phosphorsäureesters zugegeben.

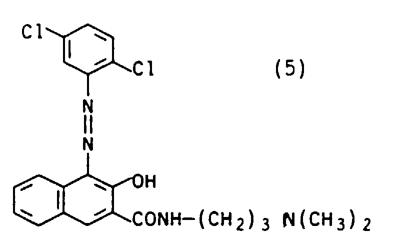

Die Suspension wurde 1 Stunde nachgerührt (Raumtemperatur), dann die Zubereitung isoliert, getrocknet und gemahlen.

### Vergleichsbeispiel 6 (Vergleich 6)

Es wurde wie in Beispiel 36 verfahren, jedoch wurde kein Phosphorsäureester zugegeben.

Die mit der Zubereitung 36 nach A1 hergestellte Offsetfarbe (18-%ige Pigmentierung) fließt besser als die mit dem Ausgangspigment oder dem Vergleich 6 hergestellte Farbe. Gegenüber Färbungen, die mit der Farbe des Ausgangspigments erhalten werden, liefert die Farbe mit der Pigmentzubereitung 36 Rakelungen von höherer Transparenz.

**Tabelle 7:**

| Fließblechwerte ohne Lagerung der Druckfarbe | | | | |
|---|---|---|---|---|
| Farbe mit Zubereitung | Stufe | | | |
| | 2 | 3 | 4 | 5 |
| | wird nach sec. erreicht | | | |
| Vergleich 6 | 40 | 137 | 310 | 710 |
| Ausgangspigment | 35 | 120 | 250 | 540 |
| Zubereitung 36 | 19 | 65 | 135 | 290 |

**Tabelle 8:**

| Fließblechwerte nach 30 min. Lagerung | | | |
|---|---|---|---|
| Farbe mit Zubereitung | nach | | |
| | 2 min | 10 min. | 15 min. |
| | wird Stufe erreicht | | |
| Vergleich 6 | 2 | 4 | 4 |
| Ausgangspigment | 2 | 4 | 5 |
| Zubereitung 36 | 3 | 5 | > 5 |

## Patentansprüche

1. Pigmentzubereitungen, enthaltend
a) ein feinteiliges Pigment,
b) 1 bis 20 Gew.-% - bezogen auf die Zubereitung - mindestens eines Farbmittels, das mindestens eine externe basische Gruppe aufweist,
c) 3 bis 30 Gew.% - bezogen auf die Zubereitung - mindestens eines Phosphorsäureesters aus der Gruppe der Dialkyl-, Trialkyl-, Diaryl-, Triaryl-, Alkylarylphosphorsäureester oder der Gruppe der sauren oder neutralen Phosphorsäureester auf der Basis von Fettalkohol-Ethylenoxid-Addukten, Fettalkohol-Propylenoxid-Addukten,Polypropylenglykol, Polyethylenglykol oder von Blockcopolymeren auf der Basis Propylenoxid und Ethylenoxid und
d) gegebenenfalls in Pigmentzubereitungen weitere übliche Hilfsmittel.

2. Pigmentzubereitungen gemäß Anspruch 1, dadurch gekennzeichnet, daß (b) eine Verbindung der allgemeinen Formel (I)
F⁅Z-X]ₙ (I)
ist, in der F ein n-wertiger Rest eines in Wasser löslichen bis in Wasser unlöslichen Farbstoffs ist, Z ein Brückenglied, X eine sekundäre, tertiäre oder quaternäre basische Gruppe und n 1 bis 4 bedeuten.

3. Pigmentzubereitungen gemäß Anspruch 2, dadurch gekennzeichnet, daß in der Formel (I) F ein n-wertiger Rest ist, der sich von einem schwer bis unlöslichen Farbstoff oder von einem Pigment ableitet.

4. Pigmentzubereitungen gemäß Anspruch 1, 2 oder 3, dadurch gekennzeichnet, daß sich (b) von dem als (a) verwendeten Pigment oder von Verbindungen aus dieser Gruppe ableitet.

5. Pigmentzubereitungen gemäß Anspruch 2, 3 oder 4, dadurch gekennzeichnet, daß Z für 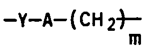 steht, worin 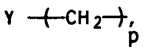 -SO₂- oder -CO-, A eine chemische Bindung, -O-, 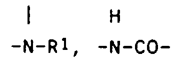 oder -CO-O-. R¹ H, C₁-C₂₀-Alkyl oder Alkoxyalkyl mit insgesamt 3 bis 6 C-Atomen, p 1 bis 6 und m 0 bis 6 bedeuten.

6. Pigmentzubereitungen gemäß Anspruch 2, 3, 4 oder 5, dadurch gekennzeichnet, daß x ein Rest der Formeln 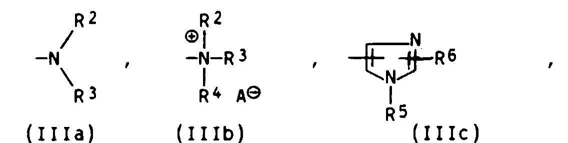 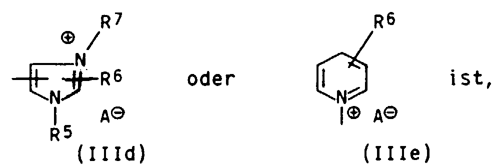 in denen R² und R³ unabhängig voneinander H, C₁-C₂₀-Alkyl, Alkoxyalkyl mit insgesamt 3 bis 8 C-Atomen, C₂-C₁₈-Hydroxyalkyl oder C₃- bis C₁₈-Alkenyl oder einer der Reste R3 oder R² gegebenenfalls durch C₁-C₄-Alkoxy, C₁-C₄-Alkyl oder Chlor substituiertes Phenyl oder Benzyl,
R⁴ H, C₁-C₂₀-Alkyl, C₁-C₁₈-Hydroxyalkyl oder Alkoxyalkyl mit insgesamt 3 bis 8 C-Atomen,
R⁵ und R⁶ unabhängig voneinander H oder C₁-C₄-Alkyl,
R⁷ C₁-C₄-Alkyl oder Hydroxy-C₂-C₄-Alkyl und A^{⊖} ein Äquivalent eines Anions bedeuten.

7. Pigmentzubereitungen gemäß Anspruch 2, 3, 4, 5 oder 6, dadurch gekennzeichnet, daß sich F von Monoazofarbstoffen, Disazofarbstoffen, Phthalocyaninen, Chinophthalonen, Indigoiden, von Phenylgruppen enthaltenden Anthrachinonfarbstoffen, von höher anellierten Carbonylfarbstoffen, von Carbonylgruppen enthaltenden Farbstoffen, von Perylen-3,4,9,10-tetracarbonsäurediimiden oder von Naphthalin-1,4,5,8-tetracarbonsäurediimiden ableitet, wobei F gegebenenfalls eine Sulfonsäuregruppe trägt.

8. Verwendung der Zubereitungen gemäß den Ansprüchen 1 bis 7 zum Pigmentieren von Druckfarben und Lacken.

## Claims

1. A pigment formulation containing
a) a finely divided pigment,
b) from 1 to 20% by weight, based on the formulation, of at least one colorant which has at least one external basic group,
c) from 3 to 30% by weight, based on the formulation, of at least one phosphoric ester from the group consisting of the dialkyl, trialkyl, diaryl, triaryl or alkylaryl phosphates or from the group consisting of the acidic or neutral phosphoric esters based on fatty alcohol/ethylene oxide adducts, fatty alcohol/propylene oxide adducts, polypropylene glycol, polyethylene glycol or of block copolymers based on propylene oxide and ethylene oxide, and
d) if required, further assistants conventionally used in pigment formulations.

2. A pigment formulation as claimed in claim 1, wherein (b) is a compound of the formula (I)
F⁅Z-X] ₙ (I)
where F is an n-valent radical of a water-soluble or water-insoluble colorant, Z is a bridge member, X is a secondary, tertiary or quaternary basic group and n is from 1 to 4.

3. A pigment formulation as claimed in claim 2, wherein, in formula (I), F is an n-valent radical which is derived from a sparingly soluble or insoluble colorant or from a pigment.

4. A pigment formulation as claimed in claim 1, 2 or 3, wherein (b) is derived from the pigment used as (a) or from a compound of this group.

5. A pigment formulation as claimed in claim 2, 3 or 4, wherein Z is 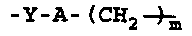 where Y is 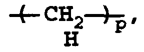 -SO₂- or -CO-, A is a chemical bond, -O-, 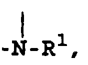 -N-CO- or -CO-O-, R¹ is H, C₁-C₂₀-alkyl or alkoxyalkyl having a total of 3 to 6 carbon atoms, p is from 1 to 6 and m is from 0 to 6.

6. A pigment formulation as claimed in claim 2, 3, 4 or 5, wherein X is a radical of the formula 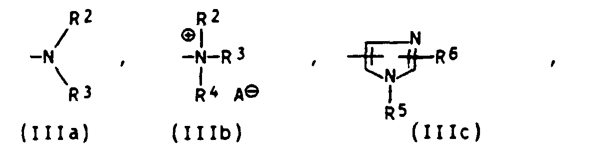 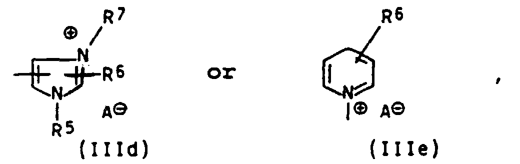 where R² and R³ independently of one another are each H, C₁-C₂₀-alkyl, alkoxyalkyl having a total of 3 to 8 carbon atoms, C₂-C₁₈-hydroxyalkyl or C₃-C₁₈-alkenyl, or one of the radicals R³ or R² is benzyl or phenyl which is unsubstituted or substituted by C₁-C₄-alkoxy, C₁-C₄-alkyl or chlorine, R⁴ is H, C₁-C₂₀-alkyl, C₁-C₁₈-hydroxyalkyl or alkoxyalkyl having a total of 3 to 8 carbon atoms, R⁵ and R⁶ independently of one another are each H or C₁C₄-alkyl, R⁷ is C₁-C₄-alkyl or hydroxy-C₁-C₄-alkyl and A^{⊖} is one equivalent of an anion.

7. A pigment formulation as claimed in claim 2, 3, 4, 5 or 6, wherein F is derived from monoazo dyes, from disazo dyes, from phthalocyanines, from quinophthalones, from indigoids, from phenyl-containing anthraquinone dyes, from carbonyl dyes having a relatively high degree of fusion, from carbonyl-containing dyes, from perylene-3,4,9,10-tetracarboxylic acid diimides or from naphthalene-1,4,5,8-tetracarboxylic acid diimides, and F may carry a sulfo group.

8. The use of a formulation as claimed in any of claims 1 to 7 for pigmenting printing inks and coatings.

## Revendications

1. Préparations pigmentaires, contenant
a) un pigment finement divisé,
b) 1 à 20% en poids - par rapport a la préparation - d'au moins un colorant qui comporte au moins un groupement basique externe,
c) 3 à 30% en poids - par rapport à la préparation - d'au moins un ester d'acide phosphorique du groupe composé des esters dialkyliques, trialkyliques, diaryliques, triaryliques et alkylaryliques d'acide phosphorique, ou du groupe composé des esters acides ou neutres d'acide phosphorique à base de produits d'addition alcool gras/oxyde d'éthylène, de produits d'addition alcool gras/oxyde de propylène, de polypropylèneglycol, de polyéthylèneglycol ou de copolymères séquencés à base d'oxyde de propylène et d'oxyde d'éthylène, et
d) éventuellement d'autres adjuvants usuels dans des préparations pigmentaires.

2. Préparations pigmentaires selon la revendication 1, caractérisées en ce que (b) est un composé de formule générale (I)
F⁅Z-X]ₙ (I)
dans laquelle F est un reste à n valences d'un colorant soluble dans l'eau à insoluble dans l'eau, Z est un maillon de pontage, X est un groupement basique secondaire, tertiaire ou quaternaire et n est mis pour 1 à 4.

3. Préparations pigmentaires selon la revendication 2, caractérisées en ce que, dans la formule (I), F est un reste à n valences qui dérive d'un colorant difficilement à non soluble ou d'un pigment.

4. Préparations pigmentaires selon l'une quelconque des revendications 1 à 3, caractérisées en ce que (b) dérive du pigment utilisé en tant que (a) ou de composés de ce groupe.

5. Préparations pigmentaires selon l'une quelconque des revendications 2 à 4, caractérisées en ce que Z est mis pour
-Y-A- (CH₂)̵ₘ
dans laquelle
Y représente (̵CH₂)̵ₚ, -SO₂- ou -CO-,
A représente une liaison chimique, -O-, 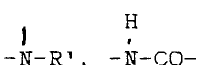 ou -CO-O-.
R¹ représente H, un reste alkyle en C₁-C₂₀ ou alcoxyalkyle à 3-6 atomes de carbone au total,
p est un nombre de 1 à à et m un nombre de 0 à 6.

6. Préparations pigmentaires selon l'une quelconque des revendications 2 à 5, caractérisées en ce que X est un reste de formule 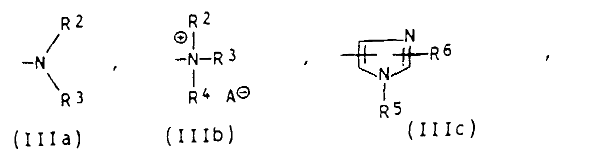 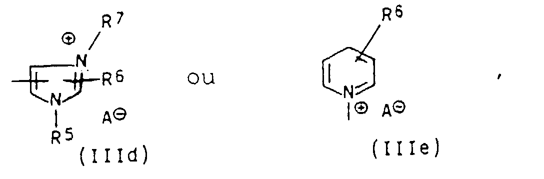 où
R² et R³ représentent chacun, indépendamment l'un de l'autre, un atome d'hydrogne ou un groupement alkyle en C₁-C₂₀, alcoxyalkyle à 3-8 atomes de carbone au total, hydroxyalkyle en C₂-C₁₈ ou alcényle en C₃-C₁₈, ou bien l'un des restes R³ ou R² représente un groupement phényle ou benzyle éventuellement substitué par un groupement alcoxy en C₁-C₄, alkyle en C₁-C₄ ou un atome de chlore,
R⁴ représente un atome d'hydrogène ou un groupement alkyle en C₁-C₂₀, hydroxyalkyle en C₁-C₁₈ ou alcoxyalkyle à 3-8 atomes de carbone au total,
R⁵ et R⁶ représentent chacun, indépendamment l'un de l'autre, un atome d'hydrogène ou un groupement alkyle en C₁-C₄,
R⁷ représente un groupement alkyle en C₁-C₄ ou hydroxyalkyle en C₂-C₄ et
A^{⊖} représente un équivalent d'un anion.

7. Préparations pigmentaires selon l'une quelconque des revendications 2 à 6, caractérisées en ce que F dérive de colorants monoazoïques, de colorants disazoïques, de phtalocyanines, de quinophtalones, d'indigoïdes, de colorants anthraquinoniques contenant des groupements phényle, de colorants carbonyliques condensés supérieurs, de colorants contenant des groupements carbonyle, de diimides d'acide pérylène-3, 4, 9, 10-tétracarboxylique ou de diimides d'acide naphtalène-1,4,5,8-tétracarboxylique, F portant éventuellement un groupement acide sulfonique.

8. Utilisation des préparations selon l'une quelconque des revendications 1 à 7 pour la pigmentation d'encres d'imprimerie et de laques.
